(19) Europäisches Patentamt
European Patent Office
Office européen des brevets

(11) EP 1 333 072 A2

(12) EUROPEAN PATENT APPLICATION

(43) Date of publication:
**06.08.2003 Bulletin 2003/32**

(51) Int Cl.7: **C09D 11/00**

(21) Application number: **03250328.6**

(22) Date of filing: **18.01.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **30.01.2002 US 353093 P**

(71) Applicant: **ROHM AND HAAS COMPANY**
**Philadelphia, Pennsylvania 19106-2399 (US)**

(72) Inventors:
- **Lau, Willie**
  **Lower Gwynedd, Pennsylvania 19002 (US)**
- **Chung, Chao-Jen**
  **North Wales, Pennsylvania 19454 (US)**

(74) Representative: **Kent, Venetia Katherine**
**Rohm and Haas (UK) Ltd**
**European Operations Patent Dept.**
**Lennig House**
**2 Mason's Avenue**
**Croydon, CR9 3NB (GB)**

# (54) Ink composition

(57) An ink composition is provided including at least one colorant, an aqueous medium, and a polymeric binder. The polymeric binder contains at least one hydrophobic monomer or fluorinated monomer as a polymerized unit. Also provided is a method inkjet printing the ink composition onto a substrate. The ink composition is suitable for providing dried ink films with improved wet rub resistance.

EP 1 333 072 A2

## Description

This invention relates to an ink composition. The ink composition contains a select polymeric binder and is suitable for providing an ink composition with improved stability. The polymeric binder has a particle size and a glass transition temperature such that the ink composition may be used as an inkjet ink having good printability, minimizes clogging of the inkjet printer head, and forms a water-resistant ink when applied to a print surface. A method is also provided for preparing a printed substrate using the ink composition.

Certain inkjet inks contain a liquid medium, a colorant such as a pigment or a dye, and a binder or a resin. In a pigment containing inkjet ink composition, the binder or resin provides adhesion of pigments to the print surface and may aid in dispersing the pigment particles. The binder or resin also provides adhesion of the pigment particles to each other, thus providing integrity to the dried ink film. The choice of binder or resin affects the properties of the resulting ink film, including the color-fastness, the water-resistance, and the rub-resistance.

Inkjet ink compositions have been formulated with polymer particles as binders to improve durability, to improve print quality and to reduce color bleeding and feathering. However, the storage stability of these compositions may be adversely affected by settling of the polymer particles from the aqueous medium of the inkjet ink composition. For example, the settling of polymer may result in a shortened lifetime for the inkjet cartridge, requiring the premature replacement of the cartridge prior to the complete usage of the inkjet ink composition contained within.

U.S. Patent 5,814,685 discloses an ink jet recording liquid containing pigment and resin dispersed in an aqueous medium. The resin is a dispersion containing polymer particles having a polymer shell with a glass transition temperature in the range of 50 to 150°C and a polymer core with a glass transition temperature in the range of -100 to 40°C. The preparation of the resin is described as requiring two individual polymerization steps: one for the preparation of the resin-type emulsifying agent that forms the shell and a second for the preparation of the core. It is disclosed that the ink jet recording liquid has good storage stability and provides printed material with good water resistance. Inkjet inks providing dried ink films with improved resistance to water are desired.

We have found select polymer compositions, which may be prepared by a single stage polymerization process, suitable as components of inkjet inks. The polymer compositions are useful as polymeric binders in inkjet inks having good storage stability and provide printed material with improved water resistance.

The first aspect of this invention provides an ink composition suitable for use as an inkjet ink, including, based on weight of the ink composition: from 0.5 to 10 weight % of at least one colorant; from 0.1 to 25 weight % of a polymeric binder containing as polymerized units, based on the weight of the polymeric binder: from 5 to 100 weight % of at least one first monomer selected from hydrophobic monomer and fluorinated monomer, from 0 to 85 weight % of at least one second monomer, from 0 to 10 weight % of at least one acid monomer or salts thereof, wherein the polymeric binder has an average particle diameter in the range of 50 to 600 nm and a glass transition temperature in the range of -60 to 45°C; and an aqueous medium.

The second aspect of this invention provides a method of inkjet printing, including the steps of: providing a substrate; ejecting an ink composition through an orifice onto the substrate, wherein the ink composition contains, based on weight of the ink composition: from 0.5 to 10 weight % of at least one colorant; from 0.1 to 25 weight % of a polymeric binder containing as polymerized units, based on the weight of the polymeric binder, from 5 to 100 weight % of at least one first monomer selected from hydrophobic monomer and fluorinated monomer, from 0 to 85 weight % of at least one second monomer, from 0 to 10 weight % of at least one acid monomer or salts thereof, wherein the polymeric binder has an average particle diameter in the range of 50 to 600 nm and a glass transition temperature in the range of -60 to 45°C; and an aqueous medium; and drying or allowing to dry the ink composition.

As used herein, the term "(meth)acrylate" refers to either acrylate or methacrylate, the term "(meth)acrylic" refers to either acrylic or methacrylic, the term "fluoroalkyl" means a partially fluorinated or perfluorinated $C_1$-$C_{20}$ alkyl, and the term, "alkyl" means linear or branched alkyl.

"Glass transition temperature" or "$T_g$" as used herein, means the temperature at or above which a glassy polymer will undergo segmental motion of the polymer chain. Glass transition temperatures of a polymer can be estimated by the Fox equation [*Bulletin of the American Physical Society* 1, 3 Page 123 (1956)] as follows:

$$\frac{1}{T_g} = \frac{w_1}{T_{g(1)}} + \frac{w_2}{T_{g(2)}}$$

For a copolymer, $w_1$ and $w_2$ refer to the weight fraction of the two comonomers, and $T_{g(1)}$ and $T_{g(2)}$ refer to the glass transition temperatures of the two corresponding homopolymers in degrees Kelvin. For polymers containing three or more monomers, additional terms are added ($w_n/T_{g(n)}$). The $T_g$ of a polymer phase can also be calculated by using the appropriate values for the glass transition temperatures of homopolymers, which may be found, for example, in "Polymer Handbook", edited by J. Brandrup and E. H. Immergut, Interscience Publishers. The values of $T_g$ reported herein are determined using differential scanning calorimetry.

The present invention provides an ink composition suitable for use as an inkjet ink, containing at least one colorant, an aqueous medium, and a select polymeric binder.

The ink composition of this invention contains the polymeric binder as polymer particles dispersed in the aqueous medium. The polymeric binder is an addition polymer prepared by the polymerization of at least one first monomer, optionally, at least one acid monomer or salts thereof, and optionally, at least one second monomer. The ink composition may contain from 0.1 to 25 weight % polymeric binder, preferably from 0.5 to 20 weight %, and more preferably from 1 to 15 weight %, based on the weight of the ink composition. The ink composition may contain one or more polymeric binders.

The polymeric binder contains as polymerized units from 5 to 100 weight %, preferably from 10 to 91 weight %, and more preferably from 20 to 81 weight % of at least one first monomer, based on the weight of the polymeric binder. The first monomer is selected from hydrophobic monomers such as $C_{12}$ to $C_{40}$ alkyl esters of (meth)acrylic acid, $C_{12}$ to $C_{40}$ alkenyl esters of (meth)acrylic acid, $C_{12}$ to $C_{20}$ alkyl styrene, $C_{12}$ to $C_{40}$ alkyl-α-methyl styrene, and $C_{10}$ to $C_{20}$ alkyl vinylether; and fluorinated monomers. Suitable alkyl and alkenyl esters of (meth)acrylic acid include lauryl (meth)acrylate, oleyl (meth)acrylate, palmityl (meth)acrylate, cetyl (meth)acrylate, stearyl (meth)acrylate, behenyl (meth)acrylate, and eicosyl (meth)acrylate. Suitable fluorinated monomers include but are not limited to: fluoroalkyl (meth)acrylate; fluoroalkylsulfoamidoethyl (meth)acrylate; fluoroalkylamidoethyl (meth)acrylate; fluoroalkyl (meth)acrylamide; fluoroalkylpropyl (meth)acrylate; fluoroalkylethyl poly(alkyleneoxide) (meth)acrylate; fluoroalkylsulfoethyl (meth)acrylate; fluoroalkylethyl vinyl ether; fluoroalkylethyl poly(ethyleneoxide) vinyl ether; pentafluoro styrene; fluoroalkyl styrene; fluorinated α-olefins; perfluorobutadiene; 1-fluoroalkylperfluorobutadiene; αH,αH,ωH,ωH-perfluoroalkanediol di(meth)acrylate; and β-substituted fluoroalkyl (meth)acrylate. Preferred fluorinated monomers have a fluoroalkyl group having form 4 to 20 carbon atoms. Particularly preferred is fluoro($C_6$-$C_{20}$)alkyl (meth)acrylate. Especially preferred fluorinated monomers are perfluorooctylethyl methacrylate and perfluorooctylethyl acrylate.

Beneficial properties may be obtained by utilizing one or more than one first monomer to prepare the polymeric binder. In one embodiment, the first monomer is selected from $C_{13}$ to $C_{40}$ alkyl esters of (meth)acrylic acid and $C_{12}$ to $C_{40}$ alkenyl esters of (meth)acrylic acid. In a second embodiment, the first monomer is selected from $C_{18}$ to $C_{40}$ alkyl esters of (meth)acrylic acid and $C_{12}$ to $C_{40}$ alkenyl esters of (meth)acrylic acid. In another embodiment, the polymeric binder is prepared containing hydrophobic monomer and fluorinated monomer, as polymerized units.

The polymeric binder may contain as polymerized units from 0 to 10 weight %, preferably 1 to 9 weight %, more preferably 3 to 7 weight %, based on the weight of the polymeric binder, of at least one ethylenically unsaturated acid or containing monomer or salts thereof, referred to herein as "acid monomer". Suitable acid monomers include, but are not limited to carboxylic acid monomers such as acrylic acid, methacrylic acid, crotonic acid, itaconic acid, maleic acid, monomethyl itaconate, monomethyl fumarate, monobutyl fumarate, or may be derived from salts or anhydrides of such acids, such as methacrylic or maleic anhydride. Other suitable acids include sulfonic acids such as vinyl sulfonic acid, 2-acrylamido-2-methyl-1-propanesulfonic acid, or the salts of such acid such as sodium vinyl sulfonate. Suitable salts of the acid monomer include ammonium, quaternary alkyl ammonium, lithium, sodium, and potassium salts. Preferred acid monomers are methacrylic acid and acrylic acid alone or in combination with another acid monomer. Methacrylic acid is more preferred.

The polymeric binder may also contain as polymerized units from 0 to 95 weight %, preferably from 1 to 89 weight %, and more preferably 12 to 77 weight %, based on the weight of the polymeric binder, of at least one second monomer. The second monomer is an ethylenically unsaturated monomer which is neither a first monomer nor an acid monomer or salts thereof. Suitable second monomers for use in the preparation of the polymeric binder include, but are not limited to $C_1$ to $C_{11}$ alkyl esters of (meth)acrylic such as methyl (meth)acrylate, ethyl (meth)acrylate, butyl (meth) acrylate, 2-ethylhexyl (meth)acrylate, decyl (meth)acrylate; hydroxyalkyl esters of (meth)acrylic acid such as hydroxyethyl (meth)acrylate and hydroxypropyl (meth)acrylate; styrene or substituted styrene; vinyl acetate or other vinyl esters; vinyl monomers such as vinyl chloride, vinylidene chloride, N-vinyl pyrrolidone; amide containing monomers such as (meth)acrylamide and substituted (meth)acrylamides such as diacetone (meth)acrylamide, and mono- and dialkyl (meth)acrylamides; and (meth)acrylonitrile. Other suitable ethylenically unsaturated monomers include $C_6$ to $C_{10}$ alkyl styrene and alkyl-α-methyl styrene, $C_6$ to $C_{10}$ alkyl dialkyl itaconate, and $C_8$ to $C_{20}$ N-alkylacrylimide. Butyl acrylate, methyl methacrylate, and styrene are preferred. Most preferred are butyl acrylate and methyl methacrylate.

Other suitable second monomers include cross-linking monomers. Crosslinking monomers include multiethylenically unsaturated monomers and "latent" crosslinkers such as acetoacetate-functional monomers such as acetoacetoxyethyl acrylate, acetoacetoxypropyl methacrylate, acetoacetoxyethyl methacrylate, allyl acetoacetate, acetoacetoxybutyl methacrylate, and 2,3-di(acetoacetoxy)propyl methacrylate; divinyl benzene, (meth)acryloyl polyesters of polyhydroxylated compounds, divinyl esters of polycarboxylic acids, diallyl esters of polycarboxylic acids, diallyl dimethyl ammonium chloride, triallyl terephthalate, methylene bis acrylamide, diallyl maleate, diallyl fumarate, hexamethylene bis maleamide, triallyl phosphate, trivinyl trimellitate, divinyl adipate, glyceryl trimethacrylate, diallyl succinate, divinyl ether, the divinyl ethers of ethylene glycol or diethylene glycol diacrylate, polyethylene glycol diacrylates of methacrylates, 1,6-hexanediol diacrylate, pentaerythritol triacrylate or tetraacrylate, neopentyl glycol diacrylate, allyl methacrylate, cyclopentadiene diacrylate, the butylene glycol diacrylates or dimethacrylates, trimethylolpropane di- or tri-acrylates, (meth)acrylamide, n-methylol (meth)acrylamide and mixtures thereof. The amount of cross-linking monomer utilized may range from 0 to 10 weight %, preferably from 0.1 to 5 weight %, and is chosen such that the cross-linking monomer does not materially interfere with film formation.

The types and the levels of the at least one first monomer, the optional at least one acid monomer, and the optional at least one second monomer are chosen to provide the polymeric binder with a glass transition temperature in the range of -60°C to 45°C, preferably in the range of -40°C to 40°C, and most preferably in the range of -20°C to 30°C.

Homopolymers formed from first monomers such as the $C_{12}$ to $C_{40}$ alkyl (meth)acrylates and the $C_{12}$ to $C_{40}$ alkenyl (meth)acrylates have lower densities, in particular densities of less than 1 g/cm$^3$, than homopolymers formed from lower molecular weight monomers such as alkyl (meth)acrylates with $C_1$ to $C_8$ alkyl groups. Thus, the incorporation of these first monomer as polymerized units into the composition of the polymeric binder allows the preparation of polymers with lower densities than polymers formed from lower molecular weight monomers such as alkyl (meth) acrylates with $C_1$ to $C_8$ alkyl groups. In one embodiment, the ink composition contains the polymeric binder formed from at least one first monomer, optionally at least one acid monomer, and optionally at least one second monomer, wherein the polymeric binder has substantially the same density as the density of the aqueous medium. The densities of the polymeric binder and the aqueous medium are determined using a densitometer. In this embodiment, the polymeric binder has improved resistance to settling and improved storage stability in the ink composition of this invention. A polymeric binder having substantially the same density as the density of the aqueous medium has a density in the range of 0.95 to 1.05, preferably in the range of 0.97 to 1.03, and more preferably in the range of 0.98 to 1.02 times the density of the aqueous medium. The densities are measured at 20°C.

The polymeric binder used in this invention may be prepared by an emulsion polymerization or solution polymerization. In a polymerization process involving more than one stage, the composition ranges described herein referred to weight based on the total weight of polymeric binder. The polymerization process may be emulsion polymerization. See U.S. Patent No. 5,521,266 for a detailed description of emulsion polymerization processes. The polymerization process may also be solution polymerization followed by emulsification and may involve a solvent removal step. See U.S. Patent No. 5,539,021 for detailed descriptions of a solution polymerization followed by mini-emulsion polymerization or micro-emulsion polymerizations. A preferred process is emulsion polymerization in the presence of a macromolecular organic compound having a hydrophobic cavity as disclosed in U.S. Patent No. 5,521,266. Suitable macromolecular organic compounds having a hydrophobic cavity include cyclodextrin, cyclodextrin derivatives, cycloinulohexose, cycloinuloheptose, cycloinulocotose, calyxarene, and cavitand. Cyclodextrin includes α-cyclodextrin, β-cyclodextrin, and γ-cyclodextrin. Cyclodextrin derivatives refers to α-cyclodextrins, β-cyclodextrins, and γ-cyclodextrins in which at least one hydroxyl group located on the rim of the cyclodextrin ring have been functionalized with a substituent group such as methyl, acetyl, hydroxypropyl, and hydroxyethyl groups. Cyclodextrin derivatives also include cyclodextrin molecules with multiple substituent groups including cyclodextrin molecules with more than one type of substituent group. Cyclodextrin derivatives do not include polymers with more than one attached cyclodextrin ring. Preferred cyclodextrin derivatives are methyl-β-cyclodextrin and hydroxypropyl-β-cyclodextrin. Methyl-β-cyclodextrin is the most preferred cyclodextrin derivative. The amount of macromolecular organic compound having a hydrophobic cavity used in the process disclosed in U.S. Patent No. 5,521,266 is typically from 0.1 to 50 weight percent, preferably 0.1 to 30 weight percent, and more preferably 0.5 to 10 weight percent based on the total weight of ethylenically unsaturated monomers.

The cyclic oligosaccharides having a hydrophobic cavity, such as cycloinulohexose, cycloinuloheptose, useful in the preparation of the polymeric binder of this invention are described by Takai *et al., Journal of Organic Chemistry,* 1994, volume 59, number 11, pages 2967-2975.

The calyxarenes useful in the preparation of the polymeric binder of this invention are described in US-A-4,699,966, WO 89/08092; JP-A- 88/197544 and JP-A-89/007837.

The cavitands useful in the preparation of the polymeric binder composition and method of the invention are described in Italian application 22522 A/89 and Moran *et al., Journal of the American Chemical Society,* volume 184, 1982, pages 5826-5828.

The polymeric binder may also be prepared by emulsion polymerization in the presence of a non-cyclical polysaccharide capable of forming an inclusion compound, as disclosed in WO 98/24821 A2. Suitable non-cyclical polysaccharides include both unmodified polysaccharides and modified polysaccharides which are partially or totally derivatized on the hydroxyl groups.

In one embodiment, the polymeric binder prepared in the presence of a macromolecular compound having a hydrophobic cavity is used to provide an ink composition containing macromolecular compound having a hydrophobic cavity.

The emulsion polymer process to prepare the polymeric binder may also include various synthesis adjuvants known in the art. The monomer mixture containing the first monomer may be emulsified with an anionic or nonionic surfactant or dispersing agent, or compatible mixtures thereof such as a mixture of an anionic and nonionic surfactant. Suitable levels range from 0.05% to 5% by weight of surfactant or dispersing agent based on the weight of the monomer mixture.

Suitable anionic dispersing agents include, for example, alkali fatty alcohol sulfates, such as sodium lauryl sulfate; alkali arylalkyl sulfonates, such as potassium isopropylbenzene sulfonate; alkali alkyl sulfosuccinates, such as sodium octyl sulfosuccinate; and alkali arylalkylpolyethoxyethanol sulfates or sulfonates, such as sodium t-octylphenoxypolyethoxyethyl sulfate, having 1 to 5 oxyethylene units.

Suitable nonionic dispersing agents include, for examples, alkyl phenoxypolyethoxy ethanols, having alkyl groups of from 7 to 18 carbon atoms and from 6 to 60 oxyethylene units such as, for example, heptyl phenoxypolyethoxyethanols; ethylene oxide esters of long chain carboxylic acids such as lauric acid, myristic acid, palmitic acid, oleic acid, or mixtures of acids such as those found in tall oil containing from 6 to 60 oxyethylene units; ethylene oxide condensates of long chain alcohols such as octyl, decyl, lauryl, or cetyl alcohols containing from 6 to 60 oxyethylene units; ethylene oxide condensates of long-chain or branched chain amines such as dodecyl amine, hexadecyl amine, and octadecyl amine, containing from 6 to 60 oxyethylene units; and block copolymers of ethylene oxide sections combined with one or more propylene oxide sections.

Polymers such as hydroxyethyl cellulose, methyl cellulose, polyacrylic acid, polyvinyl alcohol, may be used as emulsion stabilizers and protective colloids, as is known in the art.

The emulsion polymerization process to prepare the polymeric binder may be initiated by thermal decomposition of free radical precursors which are capable of generating radicals suitable for initiating addition polymerization such as, for example, ammonium or potassium persulfate. Radicals suitable for initiating addition polymerization may also be generated by using free radical precursors as the oxidizing component of a redox system, which also includes a reducing component such as potassium metabisulfite, sodium thiosulfate, or sodium formaldehyde sulfoxylate. The free radical precursor and reducing agent together, referred to as a redox system herein, may be used at a level of from about 0.001% to 5%, based on the weight of ethylenically unsaturated monomers used. Examples of redox systems include t-butyl hydroperoxide/sodium formaldehyde sulfoxylate/Fe(III) and ammonium persulfate/sodium bisulfite/sodium hydrosulfite/Fe(III). The polymerization temperature may be from 20°C to 95°C.

Chain transfer agents may be used to control the molecular weight of the polymeric binder used in the ink composition of this invention. Suitable chain transfer agents include mercaptans, such as, for example, dodecylmercaptan. The chain transfer agent may be used at from 0% to 10%, preferably from 0.1 to 5%, based on the total weight of the polymeric binder.

The polymeric binder may have a weight average molecule weight in the range of 10,000 to greater than 2,000,000 Daltons as measured by gel permeation chromatography using tetrahydrofuran solvent. The measurements are based on a polymethylmethacrylate equivalent. A preferred weight average molecular weight range for the polymeric binder is 50,000 to 1,000,000 Daltons.

The polymeric binder has an average particle diameter in the range of from 50 to 600 nm, preferably in the range of 75 to 400 nm, and more preferably in the range of 100 to 350. The average particle diameter may be determined by a light scattering technique, such as by employing a Brookhaven Instrument Corporation, "BI-90 Particle Sizer" analyzer. The particle size distribution of the polymeric binder may be unimodal, bimodal, or polymodal.

The ink composition of this invention includes at least one colorant selected from dyes and pigments. Examples of pigments include azo compounds such as condensed and chelate azo pigments, polycyclic pigments such as phthalocyanines, quinacridones, anthraquinones, dioxazines, indigo, thioindigoids, perynones, perylenes, isoindolinones, quinophthalones, nitro pigments, and daylight fluorescent pigments. Also useful are inorganic pigments such as carbon black, titanium dioxide, iron oxides, zinc oxides, and metal powders. The amount of pigment is generally determined by the desired properties of the ink to be made. The ink may contain one or more different pigments. Generally, the amount of pigments used is less that 10% and is typically from 3-8% by weight based on the total weight of ink composition. The pigment particle size must be sufficiently small that pigment particles will not clog the nozzles on the printing device in which the ink is to be used. Typical nozzle openings on ink jet printers are 30-60 microns in diameter. Preferably, the pigment particle size is from 0.05 to 5 microns, more preferably not more than one micron and most preferably not more than 0.3 microns.

The ink composition of this invention also contains an aqueous medium, preferably distilled or deionized water. Besides water, the aqueous composition may also contain water miscible organic solvents including alcohols such as methanol, ethanol, and isopropanol; glycols such as ethylene glycol, diols such as 1,3-propane diol, ketones such as acetone, or mixtures thereof.

The ink composition may also include optional additives such as humectants, dispersants, penetrants, chelating agents, buffers, biocides, fungicides, bacteriocides, surfactants, viscosity modifiers, defoamers, anti-curling agents, anti-bleed agents and surface tension modifiers, all as is known in the art. Additives are generally dictated by the requirements of the specific ink composition and are used to modify such properties of the ink composition as surface tension and viscosity as well as prevention of nozzle clogging at the printhead.

A dispersant may be included in the ink composition to aid in the dispersion or stabilization of the pigment particles in the aqueous medium. The dispersant typically contains a hydrophilic portion for water solubility and a hydrophobic portion because surfaces of many pigments are relatively non-polar. Many different dispersant compositions that meet the needs to provide a stable pigmented ink jet ink are known in the art, for example, U.S. Patent 5,821,283, U.S. Patent 5,221,334, U.S. Patent 5,712,338, and U.S. Patent 5,714,538. Alternatively, a self-dispersed pigment system may be employed. For the purposes of this invention, the polymeric dispersant composition is not critical as long as its use results in a stable and printable ink. Dispersants are typically used at 0.1 to 5 weight %, based on the weight of the ink composition. Higher levels of dispersant (up to 20%) may be added, but this generally results in an ink with a viscosity unsuitable for most conventional applications. Pigment dispersions may be made by mixing pigment, dispersant, water, and optional additives and milling the whole in a suitable device used to reduce the pigment particle size. Such devices may include horizontal media mills, vertical media mills, attritor mills, and the like.

Preferably, a humectant is used in forming the ink composition in order to keep the ink composition from drying out during application. The amount of humectant used is determined by the properties of the ink composition and may range from 1 to 30%, preferably from 5 to 15% by weight, based on the total weight of all the components in the ink composition. Useful humectants include glycerol, ethylene glycol, 1,3-propanediol, 1,4-butanediol, 1,4-cyclohexanedimethanol, 1,5-pentanediol, 1,6-hexanediol, 1,8-octanediol, 1,2-propanediol, 1,2-butanediol, 1,3-butanediol, 2,3-butanediol, diethylene glycol, triethylene glycol, tetraethylene glycol, polyethylene glycol with average molecular weight of 200, 300, 400, 600, 900, 1000, 1500 and 2000, dipropylene glycol, polypropylene glycol with average molecular weight of 425, 725, 1000, and 2000, 2-pyrrolidone, 1-methyl-2-pyrrolidone, 1-methyl-2-piperidone, N-ethylacetamide, N-methylpropionamide, N-acetyl ethanolamine, N-methylacetamide, formamide, 3-amino-1,2-propanediol, 2,2-thiodiethanol, 3,3-thiodipropanol, tetramethylene sulfone, butadiene sulfone, ethylene carbonate, ethanolamine, diethanolamine, butyrolacetone, tetrahydrofurfuryl alcohol, glycerol, 1,2,4-butenetriol, trimethylpropane, sorbital, and pantothenol. Preferred humectants are polyethylene glycol with average molecular weight of 400 to 1000, 2-pyrrolidone-2,2-thiodiethanol, and 1,5-pentanediol.

Preferred penetrants are 1,2-alkyl diols of from 1 to 4 carbon atoms forming the alkyl such as 1,2 hexanediol, and others such as N-propanol, isopropyl alcohol, and hexyl carbitol, and others as disclosed in U.S. Patent No. 5,364,461. The use of suitable penetrants will depend on the specific application of the ink composition. Useful examples include pyrrolidone, and N-methyl-2-pyrrolidone.

The amount of defoaming agent in the ink composition, if used, will typically range from 0.05 to 0.5% by weight, and is more typically 0.1 to 0.3 % by weight, based on the weight of the ink composition. The amount required depends on the process used in making the pigment dispersion component of the ink. Defoaming agents useful in forming aqueous dispersions of pigments are well known in the art and commercially available examples include Surfynol™ 104H defoamer and Surfynol™ DF-37 defoamer (Air Products, Allentown, PA) and Deefo™ PI-35 defoamer (Ultra Additives, Patterson, NJ).

The ink composition using the polymeric binder may be prepared by any method known in the art for making such compositions, for example, by mixing, stirring or agitating the ingredients together using any art recognized technique to form an aqueous ink. The procedure for preparation of the ink composition of the present invention is not critical except to the extent that the ink composition is homogenous.

<u>Ink Composition 1:</u>

4% colorant (1.2% self dispersed carbon black and 2.8% carbon black dispersant mixture)
0.5% polymeric binder (Tg -10°C, average particle size 285 nm, 1.3% acid level)
15% humectant (7.5% polyethylene glycol 400 and 7.5% 2-pyrrolidone)
0.75% terpolymer dispersant
0.75% penetrant (hexyl carbitol)
balance deionized water

<u>Ink Composition 2</u>

4% colorant-dispersant mixture (mixture of carbon black and terpolymer dispersant)
3% polymeric binder (Tg -10°C, average particle size 285 nm, 1.3% acid level)
15% humectant (5% polyethylene glycol 1000, 5% 2,2-thiodiethanol and
5% 2-pyrrolidone)

1% penetrant (1,2-hexanediol)
balance deionized water

Ink Composition 3

2.25% colorant-dispersant mixture (cyan pigment and terpolymer dispersant)
3% polymeric binder (Tg -10°C, average particle size 285 nm, 1.3% acid level)
20% humectant (10% polyethylene glycol 400 and 10% 2,2-thiodiethanol)
1% penetrant (1,2-hexanediol)
balance deionized water

The ink composition may be applied onto various substrates including paper substrates such as coated and uncoated paper; and coated and uncoated paperboard; textiles such as polyester fabric and cotton fabric; plastics such as vinyl, polyolefin, and polypropylene; glass; wood; and metal substrates such as metal foils. Examples of suitable substrates include cardboard, paperboard, corrugated paperboard, Kraft paper, ream wrap, coated printing papers, and plastic packaging materials.

The ink composition may be applied onto a substrate using an inkjet printer. In an inkjet printer, the ink composition is emitted through an orifice or a nozzle of the printhead and sprayed as droplets onto a substrate. The printhead does not contact the substrate. The emission of the ink composition may be modulated by a piezoelectric or thermal control device to provide ink droplets at the desired locations on the substrate, thus forming images or print characters on the substrate. Two or more different ink compositions may be applied onto the substrate either by sequentially applying the different ink compositions onto the substrate or by simultaneously applying the different ink composition onto the substrate. The ink composition is typically heated prior to application.

After application of the ink composition onto a substrate, the ink composition is dried or is allowed to dry with the optional application of pressure. The substrate including the ink composition may be dried by the application of heat or hot air to remove the aqueous medium. Alternatively, the ink composition applied onto a substrate may be allowed to dry at ambient conditions such as a temperature in the range of 10°C to 50°C and relative humidity in the range of 0 to 99%. Typical drying times at ambient condition may range from 1 second to 5 minutes.

The following examples are presented to illustrate the invention and the results obtained by the test procedure. The abbreviations in the following table were used in the examples:

Table -

| Abbreviations used in the Examples | |
|---|---|
| Surfactant | Ethoxylated $C_6$ to $C_{18}$ alkyl ether sulfate having from 1 to 40 ethylene oxide groups per molecule (30% active in water) |
| LA | lauryl acrylate |
| LMA | lauryl methacrylate |
| SMA | stearyl methacrylate |
| BA | butyl acrylate |
| MMA | methyl methacrylate |
| MAA | methacrylic acid |
| Me-β-CD | methyl-β-cyclodextrin |

Example 1 - Preparation of Polymeric Binders

The polymeric binders were prepared by emulsion polymerization conducted in a 5-liter round bottom flask with four necks equipped with a mechanical stirrer, a temperature control device, a condenser, a nitrogen inlet, and monomer and initiator feed lines.

Deionized water ($H_2O$#2), methyl-β-cyclodextrin (CD#1), and surfactant (Surf.#2) were introduced into the reaction flask at room temperature in accordance with Table 1.1 to form a reaction mixture. The reaction mixture were heated to 85°C while stirring under a nitrogen purge. Next, a monomer emulsion (ME#1) containing deionized water ($H_2O$#1), surfactant (Surf.#1), and monomers, was prepared separately in accordance with Table 1.1. A second monomer emulsion (ME#2) was prepared containing deionized water (31.3 grams), surfactant (0.75 grams), LMA (33.8 grams), BA (7.5 g), MMA (33 grams) and MAA (0.75 grams). With the reaction mixture at a temperature of 85°C, 5.3 grams (g) of sodium carbonate in 25g of water and 5.3g of sodium persulfate in 30g of water were added. Next, ME#2 was fed to the reaction mixture at a rate of 6 grams per minute together with a sodium persulfate solution (0.8g in 210g water) fed at a rate of 1 gram per minute, respectively. After the end of the ME#2 feed, the reaction mixture was held at 85°C for 15 minutes. For example 1.3, CD#2 was added during this period. Comparative example 1.5C was prepared similarly without the addition of methyl-β-cyclodextrin. After 15 minutes, ME#1 was fed into the reaction mixture over a period of 3 hours together with the sodium persulfate cofeed. At the end of the monomer emulsion feed, the resulting polymer dispersion was held at 85°C for 30 minutes, cooled to room temperature, neutralized with ammonia, and filtered to yield an aqueous dispersion containing the polymeric binder.

Table 1.1

| | Example 1.1 | Example 1.2 | Example 1.3 | Example 1.4 | Comparative Example 1.5C |
|---|---|---|---|---|---|
| LA | 675g | 750g | - | - | - |
| LMA | - | - | - | 600g | - |
| SMA | - | - | 600g | - | - |
| BA | 240g | - | 225g | 225g | 825g |
| Sty | 570g | - | - | - | - |
| MMA | - | 735g | 660g | 660g | 660g |
| MAA | 15g | 15g | 15g | 15g | 15g |
| $H_2O$#1 | 625g | 625g | 625g | 625g | 625g |
| $H_2O$#2 | 400g | 400g | 400g | 400g | 400g |
| Surf.#1 | 14.6g | 14.6g | 14.6g | 14.6g | 14.6g |
| Surf.#2 | 22.3g | 22.3g | 22.3g | 22.3g | 22.3g |
| CD#1 | 14.8g | 14.8g | 29.6g | 14.8g | - |
| CD#2 | - | - | 29.6g | - | - |

The aqueous dispersions containing the polymeric binders were characterized by standard laboratory methods. Weight percent solids were determined by gravimetric analysis. The average diameters of the polymer particles were obtained by using a Brookhaven BI-90 particle sizer. The glass transition temperature (Tg) were measured by using a differential scanning calorimeter (Model 12920, TA Company).

Table 1.2 -

| Physical Properties of the Polymeric Binders and Comparative Polymeric Binder | | | | |
|---|---|---|---|---|
| Examples | Weight % Solids | Particle Diameter (nm) | pH | Tg (°C) |
| 1.1 | 45.8 | 149 | 8.2 | -10.9 |
| 1.2 | 44.7 | 131 | 8.0 | 9.3 |
| 1.3 | 47.5 | 138 | 8.1 | 15.0 |
| 1.4 | 46.3 | 138 | 8.1 | 18.8 |
| 1.5C | 45.8 | 117 | 8.6 | 9.3 |

Example 2 - Preparation and Testing of Ink Compositions

The ink compositions of this invention and a comparative ink composition were prepared by combining the ingredients listed in Table 2.1 with mixing.

Table 2.1 -

| Ink Compositions and Comparative Ink Composition | | | | | |
|---|---|---|---|---|---|
| Ingredients | Example 2.1 | Example 2.2 | Example 2.3 | Example 2.4 | Comparative Example 2.5C |
| cyan pigment (20% by Wt.) | 17.50g | 17.50g | 17.50g | 17.50g | 17.50g |
| Example 1.1 | 10.85g | | | | |
| Example 1.2 | | 11.19g | | | |
| Example 1.3 | | | 10.53g | | |
| Example 1.4 | | | | 10.78g | |
| Comparative Example 1.5C | | | | | 10.92g |
| 28% $NH_4OH$ | 0.05g | 0.05g | 0.05g | 0.05g | 0.05g |
| N-methylpyrrolidone | 6.50g | 6.50g | 6.50g | 6.50g | 6.50g |
| Liponic™ EG-7 humectant | 1.00g | 1.00g | 1.00g | 1.00g | 1.00g |
| Dynol™ 604 surfactant | 0.50g | 0.50g | 0.50g | 0.50g | 0.50g |
| 1,3-propanediol | 10.20g | 10.20g | 10.20g | 10.20g | 10.20g |
| deionized water | 53.40g | 53.06g | 53.72g | 53.47g | 53.33g |
| Liponic is a trademark of Lipo Chemicals Inc.<br>Dynol is a trademark of Air Products and Chemicals Inc. | | | | | |

The ink compositions were draw down on white paper (92 brightness, 29.6 g/meter$^2$) with #5 wire size of drawdown wire rod (Gardner Company Inc., Florida, USA) and dried at 25°C and 50% relative humidity for 3 days. The water resistance of the dried ink film was characterized by measuring the wet rub resistance. The wet rub resistance was measured by placing one drop of water on the dried ink sample and then gently rubbing once by hand with a clean laboratory tissue. The wet rub resistance was characterized by evaluating the degree of smudging and rated according to the following scale:

| | |
|---|---|
| 5 | no smudging; no ink on laboratory tissue |
| 4 | slight smudging; slight amount of ink on laboratory tissue |
| 3 | moderate smudging; a spot remains from water droplet; moderate amount of ink on laboratory tissue |
| 2 | extensive smudging; heavy pickup of ink on laboratory tissue |
| 1 | ink completely rubbed off with pickup onto laboratory tissue. |

Values of 4 and greater indicated acceptable wet rub resistance.

Table 2.2 -

| Wet Rub Resistance of Dried Ink Films | |
|---|---|
| Ink Composition | Wet Rub Resistance |
| Example 2.1 | 4 |
| Example 2.2 | 4.5 |
| Example 2.3 | 4.5 |
| Example 2.4 | 4.5 |
| Comparative Example 2.5C | 3.5 |

The results in Table 2.2 indicate that the ink compositions of this invention, as exemplified by Examples 2.1 to 2.4, which include the polymeric binder containing hydrophobic monomer as polymerized units, provided dried ink films with acceptable wet rub resistance. In contrast, the dried ink film prepared from the comparative ink composition, Comparative Example 2.5C, did not have acceptable wet rub resistance.

## Claims

**1.** An ink composition suitable for use as an inkjet ink, comprising, based on the weight of said ink composition:

a) from 0.5 to 10 weight % of at least one colorant;
b) from 0.1 to 25 weight % of a polymeric binder comprising as polymerized units, based on the weight of said polymeric binder:

i) from 5 to 100 weight % of at least one first monomer selected from the group consisting of hydrophobic monomer and fluorinated monomer,
ii) from 0 to 95 weight % of at least one second monomer,
iii) from 0 to 10 weight % of at least one acid monomer or salts thereof, wherein said polymeric binder has an average particle diameter in the range of 50 to 600 nm and a glass transition temperature in the range of -60 to 45°C; and

c) an aqueous medium.

**2.** The ink composition according to claim 1 further comprising at least one macromolecular compound having a hydrophobic cavity.

**3.** The ink composition according to claim 1 or claim 2 wherein said polymeric binder has a density in the range of 0.95 to 1.05 times the density of said aqueous medium.

**4.** The ink composition according to claim 1 or claim 2 further comprising at least one humectant.

**5.** The ink composition according to claim 1 wherein said hydrophobic monomer is selected from the group consisting of $C_{13}$ to $C_{40}$ alkyl esters of (meth)acrylic acid and $C_{12}$ to $C_{40}$ alkenyl esters of (meth)acrylic acid.

**6.** A method of inkjet printing, comprising the steps of:

a) providing a substrate;
b) ejecting an ink composition through an orifice onto said substrate,
wherein said ink composition comprises, based on weight of said ink composition:

i) from 0.5 to 10 weight % of at least one colorant;
ii) from 0.1 to 25 weight % of a polymeric binder comprising as polymerized units, based on the weight of said polymeric binder, from 5 to 100 weight % of at least one first monomer selected from the group consisting hydrophobic monomer and fluorinated monomer, from 0 to 95 weight % of at least one second monomer, from 0 to 10 weight % of at least one acid monomer or salts thereof, wherein said polymeric binder has an average particle diameter in the range of 50 to 600 nm and a glass transition temperature in the range of -60 to 45°C; and
iii) an aqueous medium; and

c) drying or allowing to dry said ink composition.

**7.** The method according to claim 6 wherein said ink composition further comprises at least one macromolecular compound having a hydrophobic cavity.

**8.** The method according to claim 6 or claim 7 wherein said polymeric binder has a density in the range of 0.95 to 1.05 times the density of said aqueous medium.

**9.** The method according to claim 6 or claim 7 wherein said ink composition further comprises at least one humectant.

**10.** The method according to claim 6 wherein said hydrophobic monomer is selected from the group consisting of $C_{13}$ to $C_{40}$ alkyl esters of (meth)acrylic acid and $C_{12}$ to $C_{40}$ alkenyl esters of (meth)acrylic acid.